Europäisches Patentamt

European Patent Office

Office européen des brevets

(11) Numéro de publication: **0 280 624**
A1

# (12) DEMANDE DE BREVET EUROPEEN

(21) Numéro de dépôt: **88400410.2**

(22) Date de dépôt: **23.02.88**

(51) Int. Cl.⁴: **H 01 F 27/26**
H 01 F 15/02, H 04 N 3/195

(30) Priorité: **27.02.87 FR 8702653**

(43) Date de publication de la demande:
**31.08.88 Bulletin 88/35**

(84) Etats contractants désignés: **DE ES GB IT**

(71) Demandeur: **OREGA ELECTRONIQUE & MECANIQUE
74, rue du Surmelin
F-75020 Paris (FR)**

(72) Inventeur: **Vincent, Joel
THOMSON-CSF SCPI 19, avenue de Messine
F-75008 Paris (FR)**

(74) Mandataire: **Chaverneff, Vladimir et al
THOMSON-CSF SCPI 19, avenue de Messine
F-75008 Paris (FR)**

(54) **Dispositif de positionnement d'un circuit magnétique par rapport à la bobine d'un transformateur haute tension.**

(57) Pour garantir entre haut de cuve de bobine de transformateur THT et ferrite une distance minimale évitant les claquages, on dispose une pastille silicone (10), ce qui évite le collage du circuit magnétique par rapport à la carcasse de la bobine.

EP 0 280 624 A1

## Description

## DISPOSITIF DE POSITIONNEMENT D'UN CIRCUIT MAGNETIQUE PAR RAPPORT A LA BOBINE D'UN TRANSFORMATEUR HAUTE TENSION.

La présente invention se rapporte à un dispositif de positionnement d'un circuit magnétique par rapport à la bobine d'un transformateur haute tension. Généralement, un transformateur haute tension d'alimentation de tube cathodique trichrome comporte un circuit magnétique en ferrite à entrefer à air réglable. Cet entrefer est nécessaire pour stocker de l'énergie en phase de retour lignes ("flyback"). Le circuit magnétique a une forme générale de couronne rectangulaire et est réalisé à l'aide de deux ferrites en forme de "U" assemblés de façon que leurs branches soient en vis-à-vis respectif, en ménageant entre elles l'entrefer désiré. Ces deux ferrites sont ensuite collées, et l'ensemble, constituant le circuit magnétique est fixé solidairement à la bobine pour éviter les vibrations. Cependant, il faut respecter un positionnement du circuit magnétique par rapport à la bobine tel que la distance entre la ferrite et le haut de la cuve renfermant la bobine soit suffisante pour éviter des risques de claquage électrique. En général, cette distance doit être d'au moins 3 mm. Un premier procédé connu de fixation de la bobine par rapport à la ferrite consiste à effectuer un collage rapide, mais peu fiable à cause du fait que les colles employées sont peu compatibles à la fois avec la céramique de la ferrite et la matière plastique de la carcasse de la bobine. Un autre procédé connu consiste à utiliser une colle à prise lente, ce qui n'est pas souhaitable avec une production en grande série. Pour accélérer la prise d'une telle colle, il faudrait la chauffer à haute température, ce qui diminuerait la productivité. On connait également des procédés mécaniques de fixation, mais ils sont coûteux.

La présente invention a pour objet un dispositif de positionnement d'un circuit magnétique par rapport à la bobine d'un transformateur haute tension, dispositif qui soit simple, peu onéreux et rapide à mettre en oeuvre, et qui garantisse la distance minimale entre la ferrite et le haut de la bobine.

Le dispositif conforme à l'invention comporte une pastille en matériau électriquement isolant, légèrement élastique, insérée entre la ferrite et le haut de la bobine. De façon avantageuse, cette pastille est en matériau siliconé, d'une dureté d'environ 40 shore.

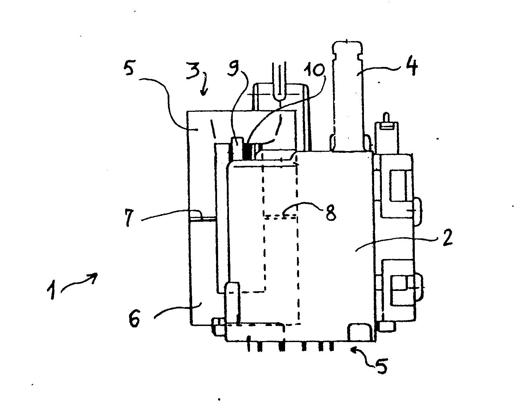

La présente invention sera mieux comprise à la lecture de la description détaillée d'un mode de réalisation, pris comme exemple non limitatif et illustré par le dessin annexé, dont la figure unique est une vue schématique de côté d'un transformateur haute tension muni d'un dispositif conforme à l'invention.

Le transformateur haute tension 1 représenté sur le dessin comporte essentiellement une bobine 2 à plusieurs enroulements (non représentée en détail), et un circuit magnétique 3.

La bobine 2 comporte une sortie haute tension isolée par une cheminée 4 à sa partie supérieure, et des broches 5 reliées à des prises d'enroulements à relativement faible potentiel, et situées à sa face inférieure, ces broches étant destinées a être soudées sur une carte à circuit imprimé.

Le circuit magnétique 3 est constitué à l'aide de deux ferrites 5,6 en forme de "U" dont les branches sont disposées en vis-à-vis, en ménageant entre elles un entrefer 7,8 respectivement.

Pour fixer en place le circuit magnétique et régler à la bonne valeur les entrefers 7,8, on procède de la façon suivante. Après avoir mis en place et bloqué en position de façon habituelle la ferrite inférieure 6, on dispose à la partie supérieure de la bobine 2, dans un logement délimité par des pattes 9 faisant saillie de la bobine, une pastille silicone 10 d'une dureté d'environ 40 shore, d'une épaisseur d'environ 6 mm, et d'un diamètre d'environ 5 mm. On dépose ensuite sur chacune des faces frontales d'extrémité (celles se trouvant au contact de l'entrefer) de la ferrite 5 un point de colle épaisse à prise rapide, et on met en place cette ferrite, en vis-à-vis de la ferrite 6, pour former le circuit magnétique 3, en maintenant le transformateur dans un appareil de réglage d'entrefer classique.

Etant donné que l'épaisseur de la pastille 10 est supérieure à la distance disponible entre la face supérieure de la bobine 2 et le circuit magnétique terminé (distance de 3 mm environ, comme précisé ci-dessus), la mise en place de la ferrite 5 provoque un écrasement de cette pastille. La mise en place de la ferrite 5 se fait de façon habituelle, avec réglage des entrefers 7 et 8 (qui doivent avoir une épaisseur d'environ 0,3 à 0,6 mm) de façon à obtenir pour les enroulements de la bobine des valeurs d'inductance bien déterminées (mesurées avec un inductance-mètre relié à la bobine). Les valeurs désirées d'inductance étant obtenues, on bloque en position l'appareil de réglage de position de la ferrite 5 pendant environ 2 minutes à 2 minutes $^1/_2$ à température ambiante d'environ 20°C pour assurer la prise de la colle qui se trouve dans les entrefers 7 et 8. Bien entendu, on dépose suffisamment de colle sur les extrémités de la ferrite 5 (ou éventuellement de la ferrite 6) pour qu'elle assure un bon collage bout à bout des ferrites 5,6 quelle que soit, dans les limites admises, l'épaisseur des entrefers. Au bout de ce temps de collage, on libère le transformateur de l'appareil de réglage.

La pastille silicone de l'invention assure non seulement le positionnement du circuit magnétique par rapport à la bobine garantissant ladite distance minimale de 3 mm (étant données les tolérances dimensionnelles de fabrication des ferrites, cette distance est généralement comprise entre 3 et 4 mm, et c'est pourquoi on a choisi une épaisseur d'environ 6 mm pour la pastille 10), mais cette pastille assure également une fonction d'amortisseur des vibrations du circuit magnétique, pour éviter des bruits de magnétostriction, puisqu'elle est comprimée entre le circuit 3 et la bobine 2. En outre, grâce à cette pastille, il n'y a plus besoin de coller le circuit magnétique par rapport à la carcasse en matière plastique de la bobine 2, ce qui fait que l'on emploie moins de colle et que son temps de prise est plus court (il est plus facile de coller ferrite sur ferrite que ferrite sur matière plastique).

## Revendications

1. Dispositif de positionnement d'un circuit magnétique (3) à deux ferrites en "U" (5,6) par rapport à la bobine (2) d'un transformateur haute tension, caractérisé par le fait qu'il comporte une pastille (10) en matériau électriquement isolant, légèrement élastique, insérée entre la ferrite et le haut de la bobine.

2. Dispositif selon la revendication 1, caractérisé par le fait que la pastille est en matériau siliconé.

3. Dispositif selon la revendication 2, caractérisé par le fait que le matériau siliconé présente une dureté d'environ 40 shore.

4. Dispositif selon l'une quelconque des revendications précédentes, pour assurer une distance minimale d'environ 3 mm entre le haut de la bobine et la ferrite, caractérisé par le fait que la pastille a une épaisseur d'environ 6 mm.

5. Dispositif selon l'une quelconque des revendications précédentes, caractérisé par le fait que l'assemblage des deux ferrites du circuit magnétique est réalisé par collage, sans les coller par rapport à la bobine.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 457 000 (VICTOR CO. OF JAPAN) * Page 11, lignes 4-24; figures 6,7 * --- | 1,5 | H 01 F 27/26 H 01 F 15/02 H 04 N 3/195 |
| A | US-A-3 665 288 (GODAWSKI) * Colonne 4, lignes 30-38; figure 1 * --- | 1,5 | |
| A | DE-A-3 316 764 (VOGT) * Page 2, lignes 1-4; figure 1 * --- | 1,5 | |
| A | CH-A- 499 188 (TELEFUNKEN) ----- | | |

**DOMAINES TECHNIQUES RECHERCHES (Int. Cl.4)**

H 01 F
H 04 N

Le présent rapport a été établi pour toutes les revendications

| Lieu de la recherche | Date d'achèvement de la recherche | Examinateur |
|---|---|---|
| LA HAYE | 27-05-1988 | BIJN E.A. |

EPO FORM 1503 03.82 (P0402)